# EUROPÄISCHE PATENTSCHRIFT

(11) **EP 0 966 798 B1**
(45) Veröffentlichungstag und Bekanntmachung des Hinweises auf die Patenterteilung: **21.11.2001**
(21) Anmeldenummer: 97954732.0
(22) Anmeldetag: 10.12.1997
(51) Int. Cl.: H04B 1/713, H04B 7/26, H04Q 7/36

(54) **NETZ ZUM ÜBERTRAGEN VON DATENPAKETEN UND VERFAHREN ZUM BETREIBEN DES NETZES**
NETWORK FOR TRANSMITTING DATA PACKETS AND METHOD FOR OPERATING THE NETWORK
RESEAU POUR LA TRANSMISSION DE PAQUETS DE DONNEES ET PROCEDE PERMETTANT DE FAIRE FONCTIONNER CE RESEAU

(30) Priorität: 12.12.1996 DE 19651708
(43) Veröffentlichungstag der Anmeldung: 29.12.1999
(73) Patentinhaber: Airdata Wiman, Inc., Naples, FL 34103 (US)
(72) Erfinder: ALTVATER, Ulrich, D-74906 Bad Rappenau (DE); BITSCH, Bernhard, D-68219 Mannheim (DE); BARON, Heinrich, D-53332 Bornheim (DE); HAAF, Peter, D-69118 Heidelberg (DE); KIESLICH, Bernd, D-74889 Sinsheim (DE); MÜLLER, Jürgen, D-74861 Neudenau (DE)
(74) Vertreter: Schäfer, Wolfgang, Dipl.-Ing.
(86) Internationale Anmeldenummer: EP9706899
(87) Internationale Veröffentlichungsnummer: WO9826542

(56) Entgegenhaltungen:
- EP-A- 0 709 983
- DE-A- 4 407 544
- US-A- 5 459 759

## Beschreibung

DIe vorliegende Erfindung betrifft ein Verfahren zum Übertragen von Datenpaketen nach dem Oberbegriff des Anspruchs 1 sowie ein entsprechendes Netz zur Übertragung von Datenpaketen nach dem Oberbegriff des Anspruchs 6.

Ein derartiges Verfahren und ein derartiges Netz sind aus der US-A-5 459 759 bekannt. Dort ist ein Kommunikationssystem beschrieben, bei dem ein Frequenzsprungverfahren zur Anwendung kommt. Jedem Basisnetz ist ein Frequenzsprungmuster zugeordnet, das zu Frequenzsprungmustern von benachbarten Basisnetzen orthogonal ist.

Weiterer Stand der Technik ist aus der EP-A-709 983 und der DE-A-44 07 544 bekannt.

Das aus der DE-A-44 07 544 bekannte Netz sowie das zugehörige bekannte Verfahren dienen zur Übertragung von Datenpaketen in einem Zusatznetz, das über Frequenzkanäle sendet, die zumindest zum Teil bereits in einem bestehenden Funknetz zur digitalen Daten- und/oder Sprachübertragung verwendet werden. Bei diesem Verfahren wird in einem ersten Schritt ein von dem Funknetz gerade nicht belegter Frequenzkanal ermittelt, woraufhin in einem zweiten Schritt ein Datenpaket über den ermittelten Frequenzkanal übertragen wird. Diese Schritte werden nach Art einer Frequenzsprungtechnik zyklisch so lange wiederholt, bis alle Datenpakete einer Sendung übertragen wurden.

Die Ermittlung eines gerade nicht von dem Funknetz belegten Frequenzkanales erfolgt bei diesem Verfahren so, daß zunächst einer der mehreren Frequenzkanäle ausgewählt wird, woraufhin dann dieser ausgewählte Kanal abgehört wird, um zu überprüfen, ob das Funknetz gerade auf diesem Frequenzkanal sendet. Wenn bei dieser Abhörung kein Signal empfangen wird, so wird davon ausgegangen, daß dieser Kanal von dem Zusatznetz verwendet werden kann.

Wenn jedoch festgestellt wird, daß der ausgewählte Kanal gerade von einem Primärnutzer benutzt wird, so verstreicht der Zeitschlitz ungenutzt, d.h. über den ausgewählten Kanal wird kein Datenpaket übertragen, um den Primärnutzer nicht zu stören.

Mit dem bekannten Verfahren ist es möglich, durch die Verwendung der Frequenzsprungtechnik bestehende Kanäle besser auszunutzen, ohne daß das jeweilige Funknetz gestört wird.

Wie in der Frequenzsprungtechnik üblich, werden die einzelnen Datenpakete zeitlich gestaffelt über verschiedene Frequenzkanäle übertragen, wobei die Last gleichmäßig auf die zur Verfügung stehenden Kanäle verteilt wird, die gerade nicht von dem Funknetz verwendet werden.

Wegen weiterer Einzelheiten des bekannten Verfahrens wird auf die eingangs genannte DE 44 07 544 verwiesen.

Bei ersten Testeinsätzen des bekannten Verfahren hat sich herausgestellt, daß es ohne Beeinträchtigung des Funknetzes einwandfrei arbeitet. Der Betrieb eines Zusatznetzes auf dem D1- oder D2-Netz bereitet keine Probleme.

Bei dem bekannten Netz handelt es sich um ein dezentrales Netz, bei dem die Zentralstation einerseits die interne Systemzeit vorgibt und andererseits für die Verbindung der einzelnen Anwenderstationen nach außen sorgt. Die Anwenderstationen können dabei sowohl miteinander als auch mit der Zentralstation kommunizieren.

Jeder Anwenderstation ist ein eigenes Frequenzsprungmuster zugeordnet, so daß jede Anwenderstation jederzeit erreichbar ist. Der Kanal, über den dies möglich ist, bestimmt sich aus der Systemzeit sowie der Adresse der jeweiligen Anwenderstation. Damit es zu keinen Kollisionen im Netz kommt, sind die Frequenzsprungmuster der einzelnen Anwenderstationen zueinander orthogonal, d.h. zu jedem beliebigen Zeitpunkt wird jeder zur Verfügung stehende Kanal innerhalb des Netzes nur einmal verwendet.

Wenn der Frequenzbereich z.B. 80 unterschiedliche Kanäle zuläßt, können in dem Netz also 79 Anwenderstationen sowie eine Zentralstation vorgesehen sein. Über die Zentralstation kann ein derartiges Netz mit einem weiteren Netz mit ebenfalls 79 Anwenderstationen sowie einer Zentralstation verbunden werden.

Da innerhalb eines Netzes mehrere Sendungen gleichzeitig abgewickelt werden können, ist der Datendurchsatz durch das Netz sehr hoch, obwohl dieses sich dem Funknetz von Primärnutzern lediglich überlagert.

Obwohl das insoweit beschriebene Netz von Anwenderstationen sehr zuverlässig mit hohem Datendurchsatz arbeitet, haben sich im Betrieb doch eine Reihe von Nachteilen herausgestellt, die zu einer merklichen Reduzierung des Datendurchsatzes führen.

So kommt es z.B. immer wieder vor, daß zwei benachbarte Anwenderstationen, die zwei benachbarten Netzen zugeordnet sind, zufälligerweise über denselben Kanal Daten empfangen, da ihre beiden Frequenzsprungmuster in dem aktuellen Zeitschlitz denselben Kanal aufweisen. Wenn diese beiden Anwenderstationen nahe genug zusammenliegen, stören sie sich dabei gegenseitig, so daß beide Datenpakete verloren gehen. Die Anwenderstationen können die Datenpakete nämlich nicht eindeutig zuordnen, so daß sie der sendenden Station den Empfang des Datenpaketes auch nicht bestätigen können. In dem jeweils nächsten Zeitschlitz muß dann in jedem Netz das verloren gegangene Datenpaket erneut übertragen werden.

Diese Störungen treten insbesondere in den Randbereichen eines Netzes auf, wo es sich mit benachbarten Netzen berührt oder gar überlagert.

Ein weiteres Problem bei dem bekannten Netz taucht dann auf, wenn von zwei benachbarten Anwenderstationen die eine gerade sendet während die andere auf Empfang geschaltet hat. Obwohl diese beiden Anwenderstationen über unterschiedliche Kanäle Daten empfangen bzw. absenden, behindert die sendende Anwenderstation doch den Empfang der anderen Anwenderstation, da ihr hohes Sendesignal zu einer Übersteuerung des Eingangsverstärkers der anderen Anwenderstation führen kann. Bei einer derartigen Übersteuerung ist die empfangende Anwenderstation nicht mehr in der Lage, das für sie bestimmte Datenpaket von dem von der benachbarten Anwenderstation ausgesandten, nicht für sie bestimmten Datenpaket zu unterscheiden. Damit geht das für die empfangende Anwenderstation bestimmte Datenpaket verloren, so daß es im nächsten Zeitschlitz wiederholt wird.

Insbesondere dann, wenn die Anwenderstationen einen große räumliche Dichte aufweisen, führen die beiden oben beschriebenen Probleme dazu, daß eine große Zahl der übertragenen Datenpakete sozusagen verloren geht, so daß der mögliche Datendurchsatz bei weitem nicht erreicht wird. Je größer die Zahl der Anwenderstationen in einem bestimmten Gebiet ist, desto stärker machen sich die beschriebenen Probleme bemerkbar.

Vor diesem Hintergrund ist es Aufgabe der vorliegenden Erfindung, das eingangs beschriebene Verfahren sowie das eingangs beschriebene Netz derart weiterzubilden, daß eine Vernetzung beliebig großer Zahlen von Anwenderstationen ohne Verlust an Datendurchsatz möglich wird.

Bei dem eingangs beschriebenen Verfahren wird diese Aufgabe erfindungsgemäß dadurch gelöst, daß das Netz in zumindest zwei Basisnetze mit jeweils einer Zentralstation und einer begrenzten Anzahl von Anwenderstationen aufgeteilt wird, und in jedem Basisnetz ein eigenes Frequenzsprungmuster abgearbeitet wird, das zu dem Frequenzsprungmuster von unmittelbar benachbarten Basisnetzen orthogonal ist.

Entsprechend wird die der Erfindung zugrundeliegende Aufgabe bei dem eingangs genannten Netz dadurch gelöst, daß es zumindest zwei Basisnetze mit jeweils einer Zentralstation und einer begrenzten Anzahl von Anwenderstationen aufweist und jedem Basisnetz ein eigenes Frequenzsprungmuster zugewiesen ist, das zu Frequenzsprungmustern von unmittelbar benachbarten Basisnetzen orthogonal ist.

Die der Erfindung zugrundeliegende Aufgabe wird auf diese Weise vollkommen gelöst.

Die Erfinder der vorliegenden Anmeldung haben nämlich erkannt, daß der gesamte Datendurchsatz überraschenderweise nicht merklich verringert wird, wenn das Netz in mehrere Basisnetze mit jeweils wenigen Anwenderstationen und einer Zentralstation aufgeteilt wird, wobei in jedem Basisnetz jetzt nur noch ein Frequenzsprungmuster abgearbeitet wird. Das bedeutet zwar, daß innerhalb eines sogenannten Zeitschlitzes nur noch eine Anwenderstation je Basisnetz Daten übertragen kann, dadurch wird jedoch die Störung von benachbarten Anwenderstationen auch bei einer sehr großen Dichte von Anwenderstationen vermieden.

Durch die Orthogonalität der Frequenzsprungmuster benachbarter Basisnetze wird ferner verhindert, daß in den Rand- oder Überlappungsbereichen von zwei unmittelbar benachbarten Basisnetzen auf ein und demselben Kanal zwei verschiedene Datenpakete transportiert werden. Die Forderung der Orthogonalität ist jedoch nur für unmittelbar benachbarte, also im gegenseitigen Funkbereich liegende Basisnetze erforderlich, das jeweils übernächste Basisnetz kann wieder ein bereits von einem anderen Basisnetz genutztes Frequenzsprungmuster verwenden.

Dabei ist weiter von Vorteil, daß die Zahl der Anwenderstationen jetzt auch auf sehr kleinem Gebiet beliebig groß werden kann, die im gegenseitigen Funkbereich liegenden Basisnetze müssen nur jeweils zueinander orthogonale Frequenzsprungmuster verwenden. Wegen der jetzt möglichen Wiederverwendung der Frequenzsprungmuster und damit der Kanäle läßt sich der Datendurchsatz dadurch sogar wieder erhöhen, ohne daß Kollisionen auftreten können. Die Kapazität wird im übrigen pro Netz jetzt nicht mehr durch die maximale Zahl von zur Verfügung stehenden Kanälen begrenzt, so daß die Zahl der Anwenderstationen und damit der Datendurchsatz deutlich erhöht werden kann.

Anwenderstationen aus benachbarten Basisnetzen, die bei dem Netz aus dem Stand der Technik noch unmittelbar miteinander kommunizieren konnten, müssen jetzt zwar über ihre jeweiligen Zentralstationen miteinander Datenpakete austauschen, der durch diese Zeitverzögerung bedingte Nachteil wird jedoch überraschenderweise dadurch mehr als ausgeglichen, daß es kaum noch zu Fehlübertragungen, also verloren gegangenen Datenpaketen kommt.

Ferner kann jetzt jede Anwenderstation nicht mehr in jedem Zeitschlitz empfangen bzw. senden, wenn die Zahl der Anwenderstationen pro Basisnetz jedoch relativ gering ist, ist dies ein nur unwesentlicher Nachteil. Es wurde nämlich weiter festgestellt, daß eine permanente Verfügung über einen Kanal bei den meisten Anwenderstationen häufig gar nicht erforderlich ist, so daß sich ein Verlust an Datendurchsatz für die einzelne Anwenderstation in den meisten Fällen nicht ergibt.

Wenn innerhalb eines Basisnetzes alle Anwenderstationen zeitgleich mit demselben Frequenzsprungmuster arbeiten, ist ferner eine lastabhängige Vergabe der Sendeberechtigung möglich. Das bedeutet, daß über das Frequenzsprungmuster für jeden Zeitschlitz zwar genau feststeht, über welchen Kanal ein Datenpaket übertragen werden kann, daß jedoch nicht statisch festgelegt werden muß, welcher Anwenderstation der Zeitschlitz jeweils zugeordnet ist. Bei einer derartigen statischen Zuordnung der Zeitschlitze würde bei einem Basisnetz mit 16 Anwenderstationen sowie 80 Kanälen jede Anwenderstation nur fünfmal innerhalb des Frequenzsprungmusters eine Sendeberechtigung erhalten.

Da jedoch verschiedene Anwenderstationen zu verschiedenen Zeiten ein völlig unterschiedliches Datenaufkommen aufweisen können, gehen dabei sehr viele Zeitschlitze für die eigentliche Datenübertragung verloren, wenn nämlich die zu dem jeweiligen Zeitschlitz eine Sendeberechtigung aufweisenden Anwenderstationen überhaupt keine Datenpakete empfangen bzw. senden können. Durch eine dynamische, also lastabhängige Zuweisung der Sendeberechtigung kann jetzt der Datendurchsatz durch ein Basisnetz noch einmal deutlich erhöht werden.

Dabei ist es bevorzugt, wenn jedes Basisnetz bis zu 256, vorzugsweise nur bis bis zu 20 Anwenderstationen bedient.

Dies hat den oben bereits angedeuteten Vorteil, daß sich bei den einzelnen Anwenderstationen quasi kein Verlust an Datendurchsatz bemerkbar macht.

Allgemein ist es bevorzugt, wenn der Satz von Kanälen in einem Frequenzband liegt, das von Primärnutzern verwendet wird, wobei ein von dem Netz von Anwenderstationen jeweils ausgewählter Kanal vor einer möglichen Datenübertragung daraufhin überprüft wird, ob ein Primärnutzer diesen Kanal z. Zt. belegt, und in Abhängigkeit von dieser Überprüfung entweder ein Datenpaket über den ausgewählten Kanal übertragen oder der in dem jeweiligen Frequenzsprungmuster nächste Kanal zur Überprüfung und möglichen Datenübertragung ausgewählt wird.

Hier ist von Vorteil, daß das neue Verfahren im Zusammenhang mit dem aus der eingangs zitierten DE 44 07 544 A1 bekannten Overlay-Verfahren verwendet werden kann. Damit stehen für das neue Verfahren eine große Anzahl von bereits anderweitig benutzten Frequenzbändern zur Verfügung. Die Erfinder der vorliegenden Anmeldung haben nämlich erkannt, daß die Ausnutzung der Kanäle durch die Primärnutzer in der Regel so gering ist, daß ein Overlay-Netz betrieben werden kann, ohne daß einerseits die Primärnutzer gestört werden oder andererseits das Overlay-Netz einen zu geringen Datendurchsatz aufweist. Die Belegung der Kanäle durch die Primärnutzer ist sogar so gering, daß trotz der eingangs beschriebenen Überprüfung nach der Methode "listen before talking" in der Regel nur sehr wenige Zeitschlitze nicht zur Datenübertragung zur Verfügung stehen, also den Datendurchsatz der Anwenderstationen negativ beeinflussen.

Bei dem neuen Verfahren ist es weiter bevorzugt, wenn die Anwenderstationen eines Basisnetzes synchron miteinander und im Gegentaktbetrieb zu der jeweiligen Zentralstation betrieben werden, und wenn vorzugsweise die Basisnetze so miteinander synchronisiert werden, daß alle Zentralstationen gleichzeitig senden bzw. empfangen.

Hier ist von Vorteil, daß die gegenseitigen Störungen noch weiter reduziert werden. Durch die Synchronisation der einzelnen Basisnetze miteinander wird erreicht, daß die Orthogonalität der Frequenzsprungmuster auch bei längerer Betriebsdauer erhalten bleibt, so daß es nicht zu Schwebungen kommt. Ein weiterer Vorteil liegt darin, daß es jetzt sowohl innerhalb eines Basisnetzes als auch zwischen benachbarten Basisnetzen nicht mehr vorkommen kann, daß von zwei benachbarten Anwenderstationen eine sendet und dabei die andere "behindert", obwohl diese auf einem anderen Kanal empfängt.

Demgemäß ist es bei dem neuen Netz bevorzugt, wenn jede Zentralstation eine Systemzeit in dem zugeordneten Basisnetz synchronisiert und das Netz eine mit den Zentralstationen verbundene Synchronisierstation umfaßt, die ein Synchronisiersignal erzeugt und ausgibt, über das die einzelnen Systemzeiten der Basisnetze miteinander synchronisiert werden.

Hier ist von Vorteil, daß eine globale Synchronisierung sämtlicher Basisnetze erreicht wird, so daß alle Anwenderstationen entweder senden oder empfangen, während die im Gegentakt zu den Anwenderstationen arbeitenden Zentralstationen alle gleichzeitig entweder empfangen oder senden.

Damit ist es jetzt möglich, nicht nur Anwenderstationen sondern auch Zentralstationen räumlich dicht nebeneinander anzuordnen, ohne daß es wegen der hohen Sendeleistung der Zentralstationen zu einer Störung (Zustopfen) benachbarter Zentralstationen kommt, die gerade empfangen wollen. Ein weiterer Vorteil der globalen Synchronisation liegt darin, daß die Orthogonalität der Frequenzsprungmuster von unmittelbar benachbarten Basisnetzen nicht mit der Zeit verloren geht, so daß auch diese Störquelle ausgeschaltet ist.

Damit ermöglichen das neue Verfahren sowie das neue Netz jedoch eine sehr sichere Übertragung von Datenpaketen mit einem sehr hohen Datendurchsatz auch dann, wenn die Anwenderstationen räumlich eine sehr hohe Dichte aufweisen.

Bei dem neuen Verfahren ist es weiter bevorzugt, wenn zwei Zentralstationen unter Zwischenschaltung einer Anwenderstation miteinander Datenpakete austauschen.

Hier ist von Vorteil, daß die Zentralstationen sehr einfach aufgebaut sein können, genau wie eine Anwenderstation können bzw. müssen sie während eines Zeitschlitzes entweder Datenpakete aussenden oder aber empfangen. Dies ist insbesondere bei der globalen Synchronisation der Anwenderstationen sowie Zentralstationen von Vorteil, weil keine komplizierten Zwischenspeicherungen etc. der Datenpakete erforderlich sind.

Dementsprechend ist es bei dem neuen Netz bevorzugt, wenn zumindest eine Zentralstation mit einer Anwenderstation eines benachbarten Basisnetzes vorzugsweise hardwaremäßig verbunden ist.

Hier ist von Vorteil, daß die die beiden Zentralstationen verbindende Anwenderstation nur Teil eines Basisnetzes sein muß, so daß bezüglich der benachbarten Frequenzsprungmuster keine besondere Vorkehrungen getroffen werden müssen. Damit ergibt sich eine Art kaskadiertes Netz, bei dem auch Zentralstationen, die zueinander ohne Sicht- oder Hardwareverbindung sind, Datenpakete oder Synchronisationssignale austauschen können.

Ein weiterer Vorteil dieser Struktur liegt darin, daß das Netz dynamisch erweitert werden kann, ohne daß auf die Lage der Zentralstationen zueinander geachtet werden muß. Ein neu aufzumachendes Basisnetz wird um eine neue Zentralstation gruppiert, die lediglich hardwaremäßig mit einer Anwenderstation aus einem bereits bestehenden Basisnetz verbunden werden muß. Auf diese Weise sind sämtliche Anwenderstationen des neuen Basisnetzes unmittelbar mit sämtlichen anderen Anwenderstationen und Zentralstationen verbunden.

Dabei ist es ferner bevorzugt, wenn zumindest eine Zentralstation mit der Synchronisierstation hardmäßig verbunden ist.

Hier ist von Vorteil, daß das Synchronisiersignal von der Synchronisierstation unmittelbar, also ohne Verwendung eines Zeitschlitzes und damit ohne Verlust an Übertragungskapazität weitergegeben werden kann. Selbstverständlich ist es möglich, mehrere Zentralstationen hardwaremäßig mit der Synchronisierstation zu verbinden. Die Zentralstationen, bei denen dies nicht möglich ist, erhalten das Synchronisiersignal als Datenpaket über eine Anwenderstation, mit der sie hardwaremäßig verbunden sind.

Allgemein ist es noch bevorzugt, wenn eine Zentralstation und/oder eine Anwenderstation je eine Sende- und eine Empfangsantenne aufweisen.

Hier ist von Vorteil, daß verglichen mit einer üblichen Antennenweiche eine elektronische Verriegelung des Eingangskreises der Empfangsantenne möglich ist, so daß bei einer eigenen Sendung der jeweiligen Zentral- oder Anwenderstation der Empfänger nicht zerstört oder soweit übersteuert werden kann, daß er bei einem sofort auf die erfolgte Sendung stattfindenden Empfang noch nicht wieder eingeschwungen ist.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert. Es zeigen:
- Fig. 1: ein schematisches Beispiel für ein Basisnetz mit Anwenderstationen und Zentralstation;
- Fig. 2: ein schematisches Beispiel für ein von dem Basisnetz aus Fig. 1 verwendetes Frequenzsprungmuster;
- Fig. 3: ein schematisches Beispiel eines Frequenzspektrums eines Funknetzes, dem das Basisnetz aus Fig. 1 überlagert wird;
- Fig. 4: die Aufteilung eines Zeitschlitzes des Basisnetzes aus Fig. 1 auf die verschiedenen Operationen; und
- Fig. 5: eine schematische Darstellung eines aus mehreren Basisnetzen aufgebauten Netzes von Anwenderstationen.

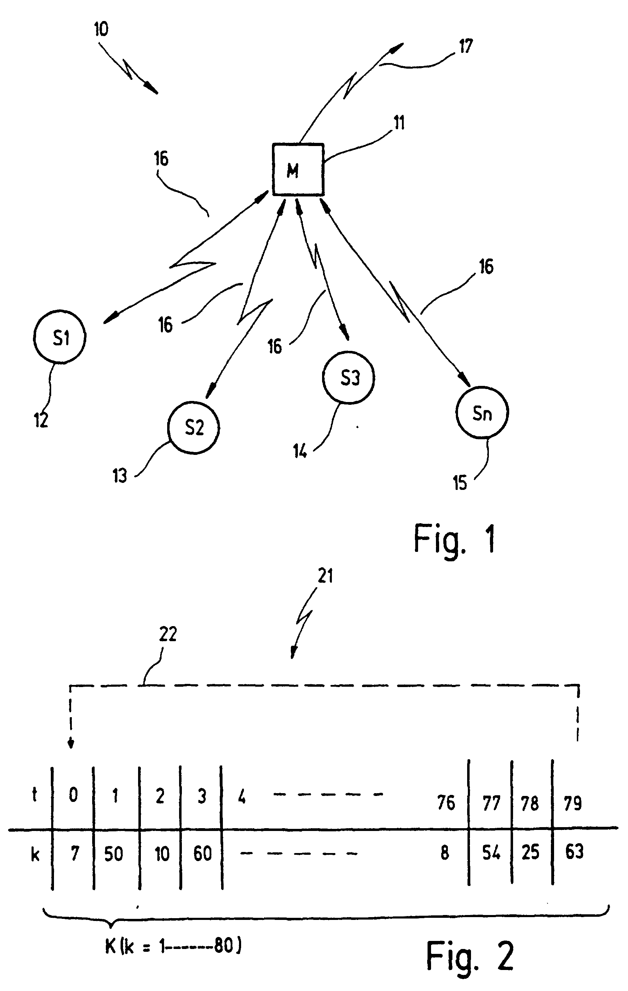

In Fig. 1 ist schematisch ein Basisnetz 10 gezeigt, das eine Zentralstation 11 sowie mehrere Anwenderstationen 12, 13, 14 und 15 umfaßt. Die Anwenderstationen 12, 13, 14 und 15 sind über interne Funkverbindungen 16 mit der Zentralstation 11 verbunden, die wiederum über eine externe Funkverbindung 17 mit weiteren Stationen verbunden ist.

Das Basisnnetz 10 ist hierarchisch strukturiert, die Anwenderstationen 12, 13, 14, 15 können lediglich über die Zentralstation 11 miteinander kommunizieren. Auch der Kontakt zu weiteren, externen Stationen erfolgt über die Zentralstation 11.

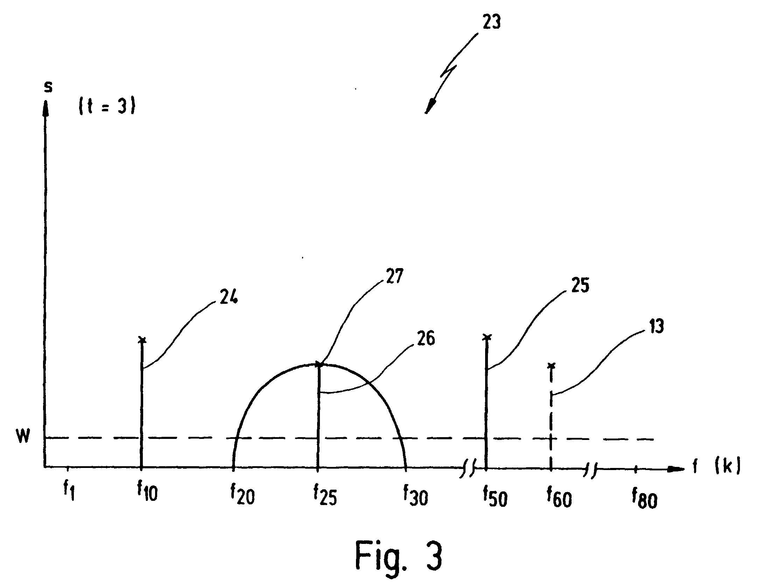

Das Basisnetz 10 verwendet für die Datenübertragung Kanäle eines im Zusammenhang mit Fig. 3 näher beschriebenen Frequenzspektrums im Frequenzsprungverfahren. Hierzu ist sowohl in der Zentralstation 11 als auch in den Anwenderstationen 12, 13, 14, 15 Station jeweils ein in Fig. 2 gezeigtes Frequenzsprungmuster 21 abgespeichert, das zyklisch durchlaufen wird, wie der Pfeil 22 andeutet.

In dem gezeigten Beispiel ist in dem Frequenzsprungmuster 21 ein Satz K(k=1...80) von 80 Kanälen statistisch verteilt so angeordnet, daß zwischen zwei aufeinanderfolgenden Kanälen K(k) ein möglichst großer Sprungabstand vorhanden ist. Dadurch wird sichergestellt, daß die Phasenlagen von zwei aufeinanderfolgenden Kanälen einen großen Abstand zueinander aufweisen, so daß bei dem einen Kanal möglicherweise auftretende, störende Interferenzen durch Mehrfachreflexionen bei dem nächsten Kanal mit großer Sicherheit vermieden werden.

Das Basisnetz 10 arbeitet mit einer Systemzeit, die aufeinanderfolgende Zeitschlitze definiert, wobei in jedem Zeitschlitz über den jeweils gültigen Kanal eine Datenübertragung zwischen der Zentralstation 11 sowie einer der Anwenderstationen 12, 13, 14, 15 oder einer externen Station erfolgt. In dem Zeitschlitz zur Zeit t = 0 wird z.B. über den Kanal 7 übertragen, während in dem Zeitschlitz t = 77 über den Kanal 54 übertragen wird.

Das Frequenzsprungmuster 21 wird zyklisch durchlaufen, so daß sich an den Zeitschlitz t = 79 wieder der Zeitschlitz t = 0 anschließt. Für welche Anwenderstation 12, 13, 14 oder 15 eine Sendung der Zentralstation 11 bestimmt ist, ergibt sich aus einer Adresse, die die Zentralstation 11 dem in dem jeweiligen Zeitschlitz zu übersendenden Datenpaket voranstellt. Mit anderen Worten, während die Systemzeit über den Zeitschlitz den jeweils zu verwendenden Kanal bestimmt, gibt die Zentralstation 11 bei der Datenübertragung den Adressaten an. Ferner wird während dieser Datenübertragung mitgeteilt, welche Anwenderstation 12, 13, 14, 15 in dem nächsten Zeitschlitz die Sendeberechtigung erhält. Der Kanal des nächsten Zeitschlitzes ergibt sich dabei aus der Frequenzsprungtabelle 21 aus Fig. 2.

Zusätzlich zu ihren jeweiligen Datenpaketen übermitteln die Anwenderstationen 12, 13, 14, 15 der Zentralstation 11 auch eine Information über die Zahl der noch zu übertragenden Datenpakete, so daß die Zentralstation 11 die Sendeberechtigung lastabhängig vergeben kann. Damit durch eine Anwenderstation 12, 13, 14, 15 mit hohem Datenaufkommen die anderen Anwenderstationen 13, 14, 15, 12 nicht völlig von der Übertragung ausgeschlossen werden, wird die Sendeberechtigung nicht allein aufgrund des Datenaufkommens sondern ebenfalls danach vergeben, wieviel Zeit seit der letzten Datenübertragung der jeweiligen Anwenderstation 13, 14, 15, 12 verstrichen ist.

Das Basisnetz 10 ermöglicht damit eine asynchrone, lastabhängige Übertragung von Datenpaketen, wobei der Datendurchsatz durch die hierarchische Vergabe von Sendeberechtigungen optimiert wird.

Das insoweit beschriebene Basisnetz 10 arbeitet jedoch nicht in einem exklusiven Frequenzbereich, es ist vielmehr ein Zusatznetz, das sich einem bestehenden Funknetz überlagert, wie es jetzt anhand der Fig. 3 beschrieben werden soll.

Fig. 3 zeigt in schematischer Weise ein von Primärnutzern genutztes Frequenzspektrum 23, das auch von den Anwenderstationen des Basisnetzes aus Fig. 1 in einer Art "Zusatznetz" genutzt wird. Das Frequenzspektrum umfaßt beispielhaft f(k) Kanäle f₁ bis f₈₀, wobei bei f₁₀ und f₅₀ jeweils ein Primärnutzer 24, 25 sendet, während bei f₆₀ die Anwenderstation 13 zu finden ist. Das Zusatznetz arbeitet also gerade bei der Systemzeit t = 3.

Neben den sehr schmalbandigen Primärnutzern 24, 25 sowie der Anwenderstation 13 ist noch ein weiterer Primärnutzer 26 vorhanden, dessen Mittenfrequenz bei f₂₅ liegt. Dieser Primärnutzer 26 ist jedoch sehr breitbandig und weist eine spektrale Glockenkurve 27 auf, die sich von f₂₀ bis zu f₃₀ erstreckt. In den Randbereichen dieser Glockenkurve, also oberhalb von f₂₀ und unterhalb von f₃₀ ist die Sendeenergie S des Primärnutzers 26 jedoch so gering, daß sie unterhalb einer detektierbaren Schwelle W liegt, so daß eine Anwenderstation z. B. auf den Kanälen f₂₁ sowie f₂₉ kein Signal empfangen könnte und diesen Kanal daher als frei ansehen würde.

Wie bereits erwähnt, verwenden die Anwenderstationen die Kanäle f₁ bis f₈₀ zur Datenübertragung nach Art der Frequenzsprungtechnik, wobei zur Vermeidung von Störungen der Primärnutzer zu Beginn einer jeden möglichen Datenübertragung überprüft wird, ob der jeweils gerade ausgewählte Frequenzkanal von Primärnutzern belegt ist. Das grundlegende Verfahren wird ausführlich in der eingangs erwähnten DE 44 07 544 A1 beschrieben, so daß auf weitere Erläuterungen hier verzichtet werden kann.

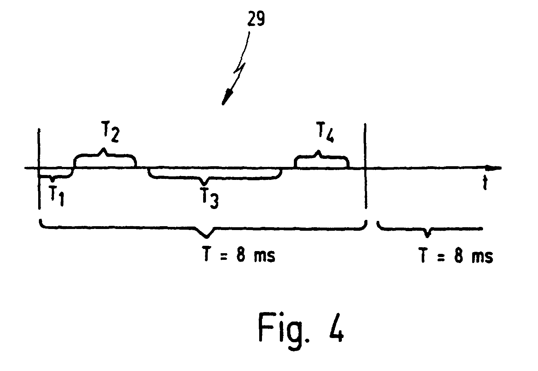

Zu jedem Zeitpunkt weiß somit eine sendende bzw. empfangende Anwenderstation, über welchen Kanal diese Sendung zu erfolgen hat. Damit diese mögliche Sendung nicht einen Primärnutzer stört, wird vor der Aussendung eines Datenpaketes in dem jeweiligen Zeitschlitz überprüft, ob der ausgewählte Kanal gerade von einem Primärnutzer belegt wird. Die hierzu erforderlichen einzelnen Operationen werden jetzt anhand der schematischen Darstellung der Fig. 4 erörtert.

Fig. 4 zeigt auf der Zeitachse einen schematisch angedeuteten Zeitschlitz 29 von T = 8 ms. Zu Beginn dieses Zeitschlitzes 29 wird zunächst der Sender der Anwenderstation auf den ausgewählten Kanal eingestellt, was während der Zeit T₁ = 50 ns erfolgt.

Daraufhin wird während der Zeit T₂ = 500 *µ*s dieser Kanal auf Belegung abgefragt. Wenn der Kanal frei ist, so wird während der Zeit T₃, die sich an T₂ anschließt, wenn auch nicht unmittelbar, ein Datenpaket übertragen, wozu 4 ms zur Verfügung stehen. Dieses Datenpaket besteht in bekannter Weise aus einem Header, einem Datenpaket sowie einem Trailer.

Nach der Übertragung des Datenpaketes wird bei T₄ noch eine gewisse Zeit gewartet, ob der Empfänger den Empfang des Datenpaketes bestätigt. Sofern diese Bestätigung eingeht, wird in dem nächsten Zeitschlitz das nächste Datenpaket übertragen, bleibt die Bestätigung aus, wird dasselbe Datenpaket in dem nächsten Zeitschlitz noch einmal übertragen.

Wenn bei der Überprüfung in T₂ erkannt wird, daß der ausgewählte Kanal bereits durch Primärnutzer belegt ist, verstreicht der Rest der Zeit des Zeitschlitzes ungenutzt, und zu Beginn des nächsten Zeitschlitzes beginnen die soeben beschriebenen Operationen von vorne.

Das insoweit beschriebene Basisnetz 10 aus Fig. 1 ist in der Lage, sich an unterschiedliche Lastzustände anzupassen, was durch eine asynchrone Übertragung von Datenpaketen mit lastabhängiger Zuweisung der Sendeberechtigung durch die Zentralstation 11 erreicht wird.

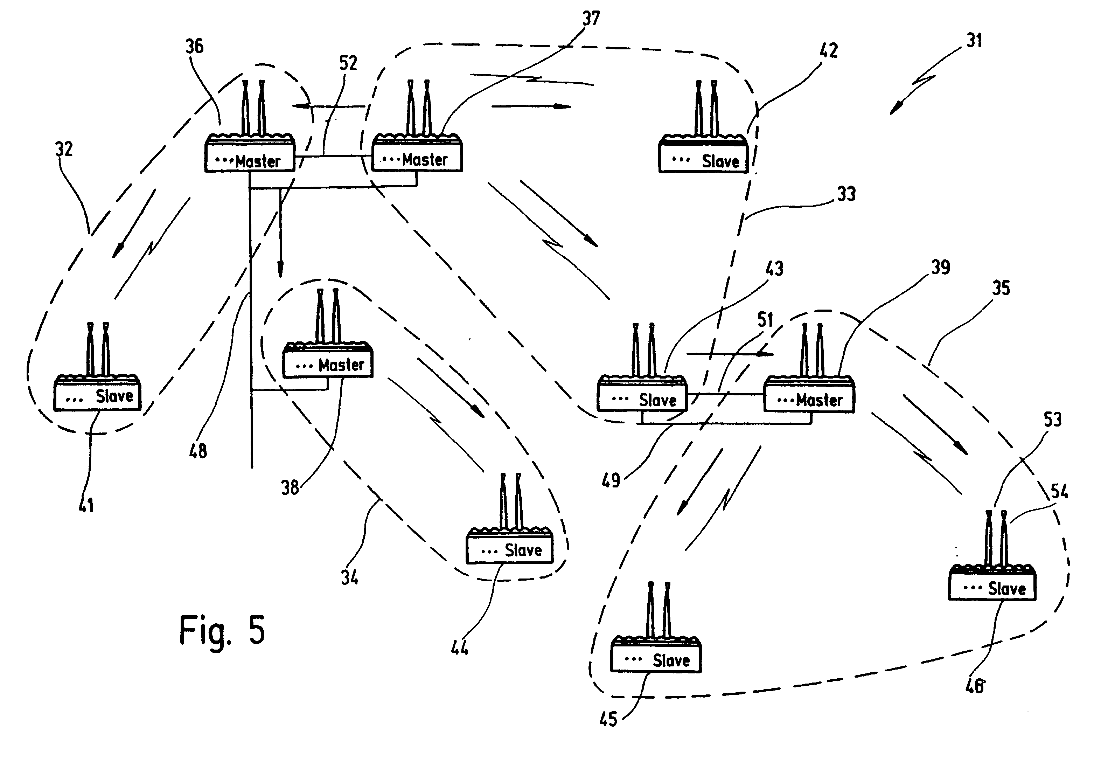

In Fig. 5 ist schematisch ein Netz 31 aus mehreren Basisnetzen 32, 33, 34, 35 dargestellt. Jedes Basisnetz 32, 33, 34, 35 ist intern im Prinzip so aufgebaut, wie das Basisnetz 10 aus Fig. 1. Jedes der Basisnetze 32, 33, 34, 35 umfaßt eine Zentralstation 36, 37, 38 bzw. 39 sowie eine oder mehrere Anwenderstationen 41, 42, 43, 44, 45, 46. Durch die gestrichelten Linien ist die Zusammengehörigkeit zwischen einer jeweiligen Zentralstation sowie der zugeordneten Anwenderstationen gezeigt. In Fig. 5 sind die Zentralstationen übrigens mit Master und die Anwenderstationen mit Slave bezeichnet, wie es auf dem hier vorliegenden Gebiet der Technik auch üblich ist.

Die Zentralstation 37 wirkt gleichzeitig als Synchronisierstation, sie ist über einen Synchronisierbus 48 mit den Zentralstationen 36 sowie 38 verbunden. Die Zentralstation 37 erzeugt ein Synchronisiersignal, das einerseits über die Hardwareverbindung des Synchronisierbuses 48 an die Master 36 sowie 38 und von diesen über Funk an die Anwenderstationen 41 bzw. 44 weitergegeben wird.

Die Zentralstation 37 sendet das Synchronisiersignal andererseits als Datenpaket über Funk an seine Anwenderstationen 42 und 43. Die Anwenderstation 43 ist hardwaremäßig über einen Synchronisierbus 49 sowie über einen Datenbus 51 mit der Zentralstation 39 des Basisnetzes 35 verbunden. Über den Synchronisierbus 49 wird der Zentralstation 39 das Synchronisiersignal übermittelt, während über den Datenbus 51 die Datenpakete weitergeleitet werden.

Die Zentralstation 39 sendet ihrerseits das Synchronisiersignal an die Anwenderstationen 45 und 46 des Basisnetzes 35.

Auf diese Weise wird ein kaskadiertes Netz 31 gebildet, das logisch in mehrere Basisnetze 32, 33, 34, 35 aufgeteilt ist. Innerhalb eines Basisnetzes 32, 33, 34, 35 übernimmt die jeweilige Zentralstation 36, 37, 38, 39 den Datenverkehr von und zu den Anwenderstationen 41, 42, 43, 44, 45, 46. Die Kommunikation zwischen benachbarten Basisnetzen erfolgt so, wie sie beispielhaft für die Basisnetze 33 und 35 wie folgt gezeigt ist:

Die Zentralstation 37 des Basisnetzes 33 übermittelt Datenpakete an "ihre" Anwenderstation 43, die wiederum hardwaremäßig über den Synchronisierbus 49 sowie über den Datenbus 51 mit dem Master 39 des sich anschließenden Basisnetzes 35 verbunden ist. Im Prinzip können an beliebig viele Anwenderstationen eines Basisnetzes jeweils eine Zentralstation eines folgenden Basisnetzes angeschlossen werden, so daß sich insgesamt eine baumartige oder aber auch eine netzartige Struktur ergibt.

Lediglich für die durch die Pfeile angedeutete Verteilung des Synchronisiersignals ist eine rein hierarchische Baumstruktur erforderlich. Nur die Systemzeituhr in der Zentralstation 37 weist eine sehr hohe Genauigkeit auf, die Systemzeituhren in den anderen Zentralstationen sowie in den Anwenderstationen sind deutlich einfacher aufgebaut, sie werden jedoch zyklisch durch das Synchronisiersignal der Zentralstation 37, die hier als Synchronisierstation wirkt, synchronisiert.

Auf diese Weise ist sichergestellt, daß die Systemzeit in dem gesamten Netz 31 überall im Bereich weniger Nanosekunden gleich ist, so daß die Zeitschlitze in sämtlichen Basisnetzen 32, 33, 34, 35 zueinander synchron liegen.

Das Netz 31 aus Fig. 5 wird nun so betrieben, daß sämtliche Anwenderstationen 41, 42, 43, 44, 45, 46 zeitgleich entweder auf Sendebetrieb oder auf Empfangsbetrieb schalten. Die Zentralstationen 36, 37, 38, 39 arbeiten im Gegentaktbetrieb zu den Anwenderstationen 41, 42, 43, 44, 45, 46, so daß sie zeitgleich auf Empfang bzw. Senden schalten.

Räumlich benachbarte Zentralstationen, wie z.B. die Zentralstationen 36 und 37 können darüber hinaus durch eine bei 52 angedeutete Hardwareverbindung miteinander verbunden sein, so daß sie für den gegenseitigen Datenaustausch nicht einer zusätzlichen Anwenderstation bedürfen, wie es bei den Zentralstationen 37 und 39 mit der Anwenderstation 43 der Fall ist.

Wegen des synchronisierten Gegentaktbetriebes kann es nicht vorkommen, daß von zwei benachbarten Stationen die eine sendet und damit die benachbarte, empfangende Station übersteuert.

Jedem Basisnetz 32, 33, 34, 35 ist nun ein eigenes Frequenzsprungmuster zugeordnet, wobei die Frequenzsprungmuster von benachbarten Basisnetzen zueinander orthogonal sind. Dies soll jetzt unter Hinzunahme des Frequenzsprungmusters 21 aus Fig. 2 näher erläutert werden.

Es sei angenommen, daß das in Fig. 2 gezeigte Frequenzsprungmuster 21 dem Basisnetz 32 zugeordnet ist. Das Frequenzsprungmuster des Basisnetzes 33 soll dem Frequenzsprungmuster 21 entsprechen, jedoch um einen Zeitschlitz versetzt, während das Frequenzsprungmuster des Basisnetzes 34 zu dem Frequenzsprungmuster 21 aus Fig. 2 um zwei Zeitschlitze versetzt sein soll.

Das bedeutet jetzt, daß z. Zt. t = 0 das Basisnetz 32 über den Kanal 7, das Basisnetz 33 über den Kanal 50 und das Basisnetz 34 über den Kanal 10 sendet. Zur Zeit t = 1 senden die Basisnetze 32, 33, 34 folglich über die Kanäle 50, 10, 60. Da sich innerhalb des Frequenzsprungmusters 21 die Kanäle nicht wiederholen, senden somit die Basisnetze 32, 33, 34 in jedem Zeitschlitz über verschiedene Kanäle, so daß es nicht zu gegenseitigen Störungen im Randbereich kommen kann. Mit anderen Worten, die Frequenzsprungmuster der Basisnetze 32, 33, 34 sind zueinander orthogonal.

Das Basisnetz 35 ist so weit von dem Basisnetz 32 entfernt, daß eine Funkverbindung zwischen Anwenderstationen bzw. Zentralstationen dieser beiden Basisnetze 32, 35 nicht möglich ist. Damit kann das Basisnetz 35 wieder das Frequenzsprungmuster 21 aus Fig. 2 verwenden, so daß es immer über denselben Kanal sendet bzw. empfängt, wie das Basisnetz 32. Wegen der räumlichen Entfernung zwischen den beiden Basisnetzen 32 und 35 kommt es jedoch nicht zu gegenseitigen Störungen.

In Fig. 5 ist schließlich noch zu erkennen, daß jede Zentralstation 36, 37, 38, 39 sowie jede Anwenderstation 41, 42, 43, 44, 45, 46 jeweils zwei Antennen aufweist, zu denen eine Sendeantenne 53 sowie eine Empfangsantenne 54 zählt, wie es bei der Anwenderstation 46 gezeigt ist.

## Patentansprüche

1. Verfahren zum Übertragen von Datenpaketen in einem Netz (31) von mehreren Anwenderstationen (41, 42, 43, 44, 45, 46) und zumindest einer Zentralstation (36, 37, 38, 39), die das Netz (31) nach außen verbindet, wobei die Datenpakete über einer. Satz von Kanälen im Frequenzsprungverfahren übertragen und die Kanäle dabei nach zumindest einem Frequenzsprungmuster (21) zeitlich nacheinander zur Datenübertragung ausgewählt werden, und wobei das Netz (31) in zumindest zwei Basisnetze (32, 33, 34, 35) mit jeweils einer Zentralstation (36, 37, 38, 39) sowie einer begrenzten Anzahl von Anwenderstationen (41, 42, 43, 44, 45, 46) aufgeteilt ist, und in jedem Basisnetz (32, 33, 34, 35) ein eigenes Frequenzsprungmuster (21) abgearbeitet wird, das zu dem Frequenzsprungmuster (21) von unmittelbar benachbarten Basisnetzen (32, 33, 34, 35) orthogonal ist, **dadurch gekennzeichnet, daß** eine Zentralstation (37) unter Zwischenschaltung einer zur Zentralstation (37) zugehörigen Anwenderstation (43) mit einer Zentralstation (39) eines benachbarten Basisnetzes (35) Datenpakete zur Synchronisation austauscht.

2. Verfahren nach Anspruch 1, **dadurch gekennzeichnet, daß** jedes Basisnetz (32, 33, 34, 35) bis zu 256, vorzugsweise bis zu 20 Anwenderstationen (41, 42, 43, 44, 45, 46) bedient.

3. Verfahren nach Anspruch 1 oder Anspruch 2 , **dadurch gekennzeichnet, daß** der Satz von Kanälen in einem Frequenzband liegt, das von Primärnutzern (24, 25, 26) verwendet wird, wobei ein von dem Netz (10) von Anwenderstationen (11, 12, 13, 14, 15) jeweils ausgewählter Kanal vor einer möglichen Datenübertragung daraufhin überprüft wird, ob ein Primärnutzer (24, 25, 26) diesen Kanal z. Zt. belegt, und in Abhängigkeit von dieser Überprüfung entweder ein Datenpaket über den ausgewählten Kanal übertragen oder aber der in dem jeweiligen Frequenzsprungmuster (21) nächste Kanal zur Überprüfung und möglichen Datenübertragung ausgewählt wird.

4. Verfahren nach einem der Ansprüche 1 bis 3, **dadurch gekennzeichnet, daß** die Anwenderstationen (41, 42, 43, 44, 45, 46) eines Basisnetzes (32, 33, 34, 35) synchron miteinander und im Gegentaktbetrieb zu der jeweiligen Zentralstation (36, 37, 38, 39) betrieben werden.

5. Verfahren nach einem der Ansprüche 1 bis 4, **dadurch gekennzeichnet, daß** die Basisnetze (32, 33, 34, 35) so miteinander synchronisiert werden, daß alle Zentralstationen (36, 37, 38, 39) gleichzeitig senden bzw. empfangen.

6. Netz zur Übertragung von Datenpaketen, mit mehreren Anwenderstationen (41, 42, 43, 44, 45, 46) und zumindest einer Zentralstation (36, 37, 38, 39), die das Netz nach außen verbindet, wobei die Datenpakete über einen Satz von Kanälen im Frequenzsprungverfahren übertragen und die Kanäle dabei nach zumindest einem Frequenzsprungmuster (21) zeitlich nacheinander zur Datenübertragung ausgewählt werden, und wobei das Netz (31) zumindest zwei Basisnetze (32, 33, 34, 35) mit jeweils einer Zentralstation (36, 37, 38, 39) und einer begrenzten Anzahl an Anwenderstationen (41, 42, 43, 44, 45, 46) aufweist und jedem Basisnetz (32, 33, 34, 35) ein eigenes Frequenzsprungmuster (21) zugewiesen ist, das zu Frequenzsprungmustern (21) von unmittelbar benachbarten Basisnetzen (32, 33, 34, 35) orthogonal ist, **dadurch gekennzeichnet, daß** eine Zentralstation (37) über eine zur Zentralstation (37) zugehörige Anwenderstation (43) mit einer Zentralstation (39) eines benachbarten Basisnetzes (35) zum Austausch von Datenpaketen für die Synchronisation vorzugsweise hardwaremäßig verbunden ist.

7. Netz nach Anspruch 6, **dadurch gekennzeichnet, daß** jedes Basisnetz (32, 33, 34, 35) bis zu 256, vorzugsweise bis zu 20 Anwenderstationen (41, 42, 43, 44, 45, 46) umfaßt.

8. Netz nach Anspruch 6 oder 7, **dadurch gekennzeichnet, daß** der Satz von Kanälen in einem Frequenzband liegt, das von Primärnutzern (24, 25, 26) verwendet wird, wobei ein von dem Netz (10) von Anwenderstationen (11, 12, 13, 14, 15) jeweils ausgewählter Kanal vor einer möglichen Datenübertragung daraufhin überprüft wird, ob ein Primärnutzer (24, 25, 26) diesen Kanal z. Z1. belegt, und in Abhängigkeit von dieser Überprüfung entweder ein Datenpaket über den ausgewählten Kanal übertragen oder aber der in dem jeweiligen Frequenzsprungmuster (21) nächste Kanal zur Überprüfung und möglichen Datenübertragung ausgewählt wird.

9. Netz nach einem der Ansprüche 6 bis 8, **dadurch gekennzeichnet, daß** jede Zentralstation (36, 37, 38, 39) eine Systemzeit in dem zugeordneten Basisnetz (32, 33, 34, 35) synchronisiert und das Netz (31) eine mit den Zentralstationen (36, 37, 38, 39) verbundene Synchronisierstation (37) umfaßt, die ein Synchronisiersignal erzeugt und ausgibt, über das die einzelnen Systemzeiten der Basisnetze (32, 33, 34, 35) miteinander synchronisiert werden.

10. Netz nach Anspruch 9, **dadurch gekennzeichnet, daß** zumindest eine Zentralstation (36, 38) mit der Synchronisierstation (37) hardwaremäßig verbunden ist.

11. Netz nach einem der Ansprüche 6 bis 10, **dadurch gekennzeichnet, daß** eine Zentralstation (36, 37, 38, 39) und/oder eine Anwenderstation (41, 42, 43, 44, 45, 46) je eine Sende- und eine Empfangsantenne (53, 54) aufweisen.

## Claims

1. Process for transmitting data packets in a network (31) of a plurality of user stations (41, 42, 43, 44, 45, 46) and at least one central station (36, 37, 38, 39) which connects the network (31) to the outside, wherein the data packets are transmitted via set of channels in the frequency hopping process and the channels are selected in this process for data transmission according to at least one frequency hopping pattern (21) so as to follow one another in time sequence, and wherein the network (31) is divided into at least two basic networks (32, 33, 34, 35) with one central station (36, 37, 38, 39) respectively and a limited number of user stations (41, 42, 43, 44, 45, 46) and a separate frequency hopping pattern (21) is serviced in each basic network (32, 33, 34, 35), which is orthogonal to the frequency hopping pattern (21) of immediately adjacent basic networks (32, 33, 34, 35), **characterised in that** for synchronisation a central station (37) exchanges data packets with a central station (39) of an adjacent basic network (35) by interconnecting a user station (43) associated with the central station (37).

2. Process according to claim 1, **characterised in that** each basic network (32, 33, 34, 35) serves up to 256, preferably up to 20 user stations (41, 42, 43, 44, 45, 46).

3. Process according to claim 1 or claim 2 **characterised in that** the set of channels is in a frequency band which is used by primary users (24, 25, 26), wherein one channel selected, in each case, from the network (10) of user stations (11, 12, 13, 14, 15) prior to a possible data transmission, is checked for whether a primary user (24, 25, 26) is currently occupying this channel, and depending on this check, either a data packet is transmitted via the selected channel or else the next channel in the respective frequency hopping pattern (21) is selected for checking and possible data transmission.

4. Process according to any one of claims 1 to 3, **characterised in that** the user stations (41, 42, 43, 44, 45, 46) of a basic network (32, 33, 34, 35) are operated synchronously to one another and in push-pull operation to the respective central station (36, 37, 38, 39).

5. Process according to any one of claims 1 to 4, **characterised in that** the basic networks (32, 33, 34, 35) are synchronised with one another is such a way that all central stations (36, 37, 38, 39) transmit or receive simultaneously.

6. Network for transmitting data packets, with a plurality of user stations (41, 42, 43, 44, 45, 46) and at least one central station (36, 37, 38, 39) which connects the network to the outside, wherein the data packets are transmitted via a set of channels in the frequency hopping process and the channels are selected in this process for data transmission according to at least one frequency hopping pattern (21) so as to follow one another in time sequence, and wherein the network (31) comprises at least two basic networks (32, 33, 34, 35) with one central station (36, 37, 38, 39) respectively and a limited number of user stations (41, 42, 43, 44, 45, 46) and a separate frequency hopping pattern (21) is allocated to each basic network (32, 33, 34, 35) with is orthogonal to frequency hopping patterns (21) of immediately adjacent basic networks (32, 33, 34, 35), **characterised in that** for synchronisation a central station (37) is connected, preferably in terms of hardware, via a user station (43) associated with the central station (37) to a central station (39) of an adjacent basic network (35) to exchange data packets.

7. Network according to claim 6, **characterised in that** each basic network (32, 33, 34, 35) comprises up to 256, preferably up to 20 user stations (41, 42, 43, 44, 45, 46).

8. Network according to claim 6 or 7, **characterised in that** the set of channels are in a frequency band that is used by primary users (24, 25, 26), wherein one channel selected, in each case, from the network (10) of user stations (11, 12, 13, 14, 15) prior to a possible data transmission, is checked for whether a primary user (24, 25, 26) is currently occupying this channel, and depending on this check, either a data packet is transmitted via the selected channel or else the next channel in the respective frequency hopping pattern (21) is selected for checking and possible data transmission.

9. Network according to any one of claims 6 to 8, **characterised in that** each central station (36, 37, 38, 39) synchronises a system time in the associated basic network (32, 33, 34, 35) and the network (31) comprises a synchronising station (37) connected to the central stations (36, 37, 38, 39) which synchronising station (37) produces and emits a synchronisation signal via which the individual system times of the basic networks (32, 33, 34, 35) are synchronised with one another.

10. Network according to claim 9, **characterised in that** at least one central station (36, 38) is connected in terms of hardware to the synchronising station (37).

11. Network according to any one of claims 6 to 10, **characterised in that** a central station (36, 37, 38, 39) and/or a user station (41, 42, 43, 44, 45, 46) have a transmitting and a receiving antenna (53, 54) respectively.

## Revendications

1. Procédé de transmission de paquets de données sur un réseau (31) comprenant plusieurs stations utilisateurs (41, 42, 43, 44, 45, 46) et au moins une station centrale (36, 37, 38, 39) qui relie le réseau (31) à l'extérieur, les paquets de données étant transmis par un jeu de canaux suivant le procédé à saut de fréquences et les canaux étant alors sélectionnés successivement selon au moins une trame à saut de fréquences (21) pour la transmission de données, et le réseau (31) étant divisé en au moins deux réseaux de base (32, 33, 34, 35) comprenant chacun une station centrale (36, 37, 38, 39) et un nombre limité de stations utilisateurs (41, 42, 43, 44, 45, 46), et dans chaque réseau de base (32, 33, 34, 35) étant traitée une trame a saut de fréquences (21) lui étant propre et qui est orthogonale à la trame à saut de fréquences (21) de réseaux de base (32, 33, 34, 35) directement voisins, **caractérisé en ce qu'**une station centrale (37), par interconnexion d'une station utilisateur (43) associée à la station centrale (37), échange des paquets de données pour synchronisation avec une station centrale (39) d'un réseau de base (35) voisin.

2. Procédé selon la revendication 1, **caractérisé en ce que** chaque réseau de base (32, 33, 34, 35) dessert jusqu'à 256, de préférence jusqu'à 20 stations utilisateurs (41, 42, 43, 44, 45, 46).

3. Procédé selon la revendication 1 ou 2, **caractérisé en ce que** le jeu de canaux se situe sur une bande de fréquence utilisée par des utilisateurs primaires (24, 25, 26), un canal respectivement sélectionné par le réseau (10) de stations utilisateurs (11, 12, 13, 14, 15) étant vérifié avant une transmission de données possible pour savoir si ce canal est actuellement occupé par un utilisateur primaire (24, 25, 26), et **en ce qu'**en fonction de cette vérification, soit un paquet de données est transmis par le canal sélectionné, soit le canal de plus proche de la trame à saut de fréquences (21) respective est sélectionné pour la vérification et la transmission de données possible.

4. Procédé salon l'une des revendications 1 à 3, **caractérisé en ce que** les stations utilisateurs (41, 42, 43, 44, 45, 46) d'un réseau de base (32, 33, 34, 35) sont exploitées de façon synchronisée les unes avec aux autres et symétriquement par rapport à la station centrale (36, 37, 38, 39) respective.

5. Procédé selon l'une des revendications 1 à 4, **caractérisé en ce que** les réseaux de base (32, 33, 34, 35) sont synchronisés les uns avec les autres de telle manière que toutes les stations centrales (36, 37, 38, 39) émettent ou reçoivent en même temps.

6. Réseau de transmission de paquets de données comprenant plusieurs stations utilisateurs (41, 42, 43, 44, 45, 46) et au moins une station centrale (36, 37, 38, 39) qui relie le réseau (31) à l'extérieur, les paquets de données étant transmis par un jeu de canaux suivant le procédé à saut de fréquences et les canaux étant alors sélectionnés successivement selon au moins une trame à saut de fréquences (21) pour la transmission de données, et le réseau (31) étant divisé en au moins deux réseaux de base (32, 33, 34, 35) comprenant chacun une station centrale (36, 37, 38, 39) et un nombre limité de stations utilisateurs (41, 42, 43, 44, 45, 46), et à chaque réseau de base (32, 33, 34, 35) étant associée une trame à saut de fréquences (21) lui étant propre et qui est orthogonale aux trames de saut de fréquences (21) de réseaux de base (32, 33, 34, 35) directement voisins, **caractérisé en ce qu'**une station centrale (37), par interconnexion d'une station utilisateur (43) associée à la station centrale (37), est reliée pour la synchronisation de préférence par des moyens matériels à une station centrale (39) d'un réseau de base (35) voisin pour échanger des paquets de données.

7. Réseau selon la revendication 6, **caractérisé en ce que** chaque réseau de base (32, 33, 34, 35) comprend jusqu'à 256, de préférence jusqu'à 20 stations utilisateurs (41, 42, 43, 44, 45, 46).

8. Réseau selon la revendication 6 ou 7, **caractérisé en ce que** le jeu de canaux se situe sur une bande de fréquences utilisée par des utilisateurs primaires (24, 25, 26), un canal respectivement sélectionné par le réseau (10) de stations utilisateurs (11, 12, 13, 14, 15) étant vérifié avant une transmission de données possible pour savoir si ce canal est actuellement occupé par un utilisateur primaire (24, 25, 26), et **en ce qu'**en fonction de cette vérification soit un paquet de données est transmis par le canal sélectionné, soit le canal le plus proche dans la trame à saut de fréquences (21) respective est sélectionné pour la vérification et la transmission de données possible.

9. Réseau selon l'une des revendications 6 à 8, **caractérisé en ce que** chaque station centrale (36, 37, 38, 39) synchronise un temps de système dans le réseau de base associé (32, 33, 34, 35) et que le réseau (31) comprend une station de synchronisation (37) reliée aux stations centrales (36, 37, 38, 39) qui génère et émet un signal de synchronisation permettant de synchroniser les différents temps de système des réseaux de base (32, 33, 34, 35) les uns avec les autres.

10. Réseau selon la revendication 9, **caractérisé en ce qu'**au moins une station centrale (36, 38) est reliée par des moyens matériels à la station de synchronisation (37).

11. Réseau selon l'une des revendications 6 à 10, **caractérisé en ce qu'**une station centrale (36, 37, 38, 39) et/ou une station utilisateur (41, 42, 43, 44, 45, 46) présente respectivement une antenne d'émission et une antenne de réception (53, 54).
